# FASCICULE DE BREVET EUROPEEN

(11) **EP 0 511 361 B1**
(45) Date de publication et mention de la délivrance du brevet: **10.04.1996**
(21) Numéro de dépôt: 91920910.6
(22) Date de dépôt: 08.11.1991
(51) Int. Cl.: G02F 1/35

(54) **DISPOSITIF DE STABILISATION DE LA REFLECTIVITE DE MIROIRS A CONJUGAISON DE PHASE PAR DIFFUSION BRILLOUIN STIMULEE A HAUTE CADENCE DE REPETITION D'IMPULSIONS**
VORRICHTUNG ZUR STABILISIERUNG DER REFLEKTIVITÄT EINES PHASENKONJUGIERUNGSSPIEGELS FÜR HOHE WIEDERRHOLUNGSFREQUENZ DER MIT STIMULIERTER BRILLOUIN-STREUUNG WIRKT
PHASE CONJUGATION MIRROR REFLECTIVITY STABILIZATION DEVICE USING STIMULATED HIGH PULSE-REPETITION RATE BRILLOUIN SCATTERING

(30) Priorité: 16.11.1990 FR 9014286
(43) Date de publication de la demande: 04.11.1992
(73) Titulaire: THOMSON-CSF, F-75008 Paris (FR)
(72) Inventeur: AYRAL, Jean-Luc, F-92045 Paris-La Défense Cédex 67 (FR); TOURNOIS, Pascal, F-92045 Paris-La Défense Cédex 67 (FR); HUIGNARD, Jean-Pierre, F-92045 Paris-La Défense Cédex 67 (FR)
(74) Mandataire: Guérin, Michel
(86) Numéro de dépôt international: FR9100877
(87) Numéro de publication internationale: WO9209005

(56) Documents cités:
- WO-A-83/04145
- WO-A-88/03724
- APPLIED PHYSICS B. PHOTOPHYSICS AND CHEMISTRY, vol. 36, 1985, Heidelberg DE, pp. 83-92; I.D. CARR et al.: "Performance of a Nd : YAG Oscillator/Amplifier with Phase-Conjugation via Stimulated Brillouin Scattering"
- SOVIET JOURNAL OF QUANTUM ELECTRONICS, vol. 20, no. 7, juillet 1990, New York US, pp. 770-772; B.I. DENKER et al.: "Compact Laser with a Stimulated Brillouin Scattering Mirror Operated at Pulse Repetition Frequency up to 150 Hz"

## Description

L'invention concerne un dispositif de stabilisation de la réflectivité d'un miroir à conjugaison de phase. Ce dispositif est applicable à l'amélioration de la réflectivité de miroirs à conjugaison de phase par diffusion Brillouin stimulée à haute cadence de répétition d'impulsions.

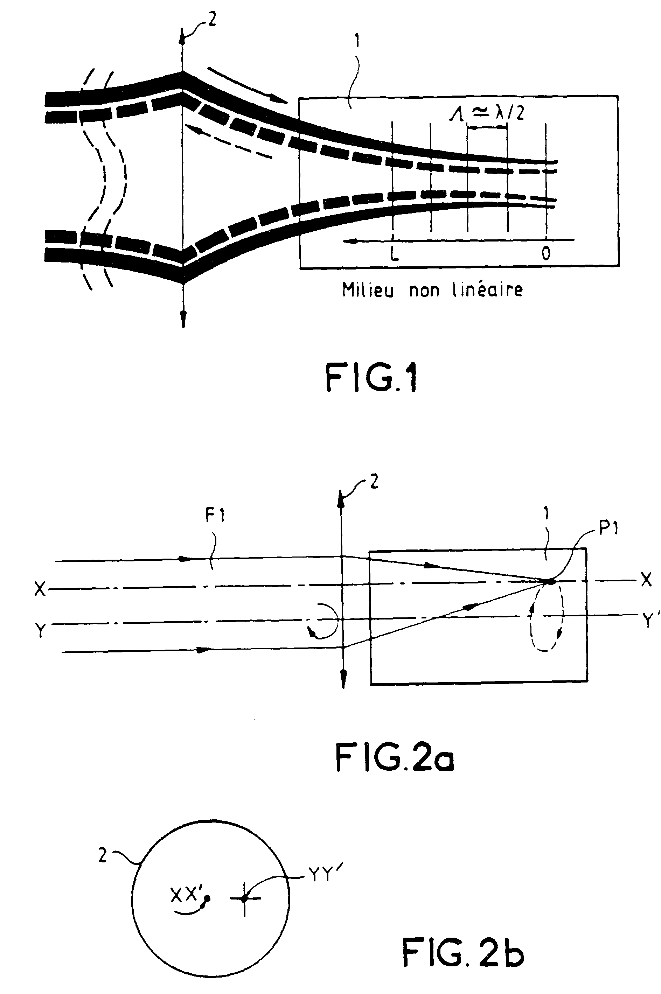

La diffusion Brillouin stimulée est un mécanisme physique bien adapté à la conjugaison de la phase d'impulsions courtes dans la gamme 1 - 10 ns de durée. Les applications concernent la correction de distorsion optique de phase d'origines diverses, par exemple dans les milieux laser solides tels que YAG : Nd. Une géométrie très souvent utilisée pour réaliser de tels miroirs à conjugaison de phase est représentée sur la figure 1 : l'onde incidente qui a subi l'aberration est focalisée dans le milieu non linéaire, qui est le plus souvent un gaz (CH₄, Xe, ...) ou un liquide (acétone ...). Au delà d'un seuil en puissance crête, on observe la création d'une impulsion réfléchie, avec un fort rendement (jusqu'à 90 %) qui est conjuguée en phase de l'onde incidente.

Si ces performances sont vérifiées dans le cas d'impulsions incidentes uniques, néanmoins le fait d'augmenter la cadence de répétition conduit à une baisse ou à des fluctuations de la réflectivité en fonction du temps, corrélée à une dégradation de la qualité de la conjugaison de phase (fidélité). Ces effets néfastes sont certainement dus à l'échauffement du milieu non linéaire à cause de son absorption non nulle, qui conduit à la formation de turbulences qui dégradent le processus.

Cela est expliqué dans le document "Compact Laser with a stimulated Brillouin scattering mirror operated at pulse repetition frequency up to 150 Hz" de B.I. DENKER et al., Soviet Journal of Quantum Electronics, 20 (1990) July, n° 7, New York US.

Plusieurs solutions ont déjà été envisagées pour s'affranchir de cette diminution des performances à haute cadence. Ces solutions prévoient de faire circuler le fluide dans la cellule à gaz afin de le renouveler dans la zone d'intéraction à chaque impulsion. Cette solution nécessite la réalisation de flux laminaires dans la région d'interaction et complique l'utilisation des miroirs à conjugaison de phase dans des systèmes où les contraintes d'encombrement sont sévères. Egalement, le document WO 88/03724 prévoit d'agiter la cellule contenant le gaz pour obtenir une homogénéité thermique; le préambule de la revendication 1 est basé sur ce document.

L'invention prévoit de déplacer la zone d'interaction dans le milieu actif à l'aide de moyens optiques appropriés afin que cette zone d'interaction soit différente d'une impulsion à la suivante.

De plus, selon l'invention, ce déplacement se fait sans aucun mouvement du milieu actif.

L'invention concerne donc un dispositif miroir comprenant un miroir à conjugaison de phase et un dispositif de stabilisation permettant d'éviter une surchauffe du milieu non linéaire du dispositif miroir dans le cas d'impulsions à cadence de répétition élevée caractérisé en ce que le dispositif de stabilisation comporte un moyen de déplacement qui permet de déplacer le point de focalisation d'un faisceau incident à l'intérieur du miroir à conjugaison de phase.

Un dispositif de focalisation du faisceau incident permet de focaliser le faisceau incident en un point situé à l'intérieur du miroir à conjugaison de phase.

Les moyens de déplacement permettent alors de déplacer le point de focalisation à l'intérieur du miroir à conjugaison de phase.

Les différents objets et caractéristiques de l'invention apparaîtront dans la description qui va suivre et dans les figures annexées qui représentent :
- la figure 1, le fonctionnement d'un miroir à conjugaison de phase déjà décrit précédemment ;
- les figures 2a et 2b, un exemple de réalisation du dispositif de l'invention dans lequel le point de focalisation se déplace selon un cercle dans un plan perpendiculaire à l'axe optique du système ;
- la figure 3, une variante de réalisation du dispositif des figures 2a et 2b ;
- la figure 4, un exemple de réalisation du dispositif de l'invention dans lequel le point de focalisation se déplace selon une ligne dans un plan perpendiculaire à l'axe optique du système.

Avant de décrire les exemples de réalisation de l'invention, il convient de préciser que ces exemples peuvent contenir des caractéristiques qui leur sont propres mais qui ne sont pas forcément des caractéristiques essentielles de l'invention.

La caractéristique essentielle de l'invention est qu'on déplace le faisceau à réfléchir par rapport au miroir à conjugaison de phase.

Le dispositif de la figure 2a est la solution la plus simple un problème posé.

Cette solution, qui est la plus simple puisque qu'elle permet de ne rajouter aucun élément optique supplémentaire sur le trajet du faisceau, est représentée sur la figure 2. Dans ce cas, le point local décrit un cercle, ce qui permet d'éviter de dissiper trop d'énergie thermique toujours au même endroit du milieu non linéaire.

Des mesures expérimentales ont permis de mettre en évidence la stabilisation de la réflectivité avec ce dispositif à 10 Hz de cadence de répétition.

L'exemple de réalisation du dispositif de l'invention de la figure 2a comporte une lentille de focalisation 2 placée sur le trajet d'un faisceau F1 et devant le miroir à conjugaison de phase 1. Le faisceau F1 est donc focalisé en un point P contenu dans le miroir à conjugaison de phase. Le miroir à conjugaison de phase est de préférence constitué d'un milieu en matériau non linéaire auquel est associée la lentille de focalisation 2.

La lentille de focalisation 2 possède un axe de rotation YY' qui ne coïncide pas avec l'axe optique XX' de la lentille. Des moyens non représentés permettent de faire tourner la lentille 2 autour de son axe YY'. Le faisceau incident F1 est transmis parallèlement à l'axe de rotation YY'.

Le point de focalisation P1 se trouve sur l'axe XX'. Lorsque la lentille tourne autour de son axe YY', l'axe XX' tourne autour de l'axe YY'. Le point P1 tourne également autour de l'axe YY' et décrit un cercle situé dans un plan perpendiculaire à l'axe XX'. De plus le dispositif de la figure 2a peut comporter des moyens pour déplacer l'axe YY' par rapport à l'axe XX'. En déplaçant l'axe YY' on changera alors le rayon du cercle décrit par le point P1.

Selon la figure 2a, les axes et YY' sont parallèles et le faisceau F1 est parallèle à ces axes.

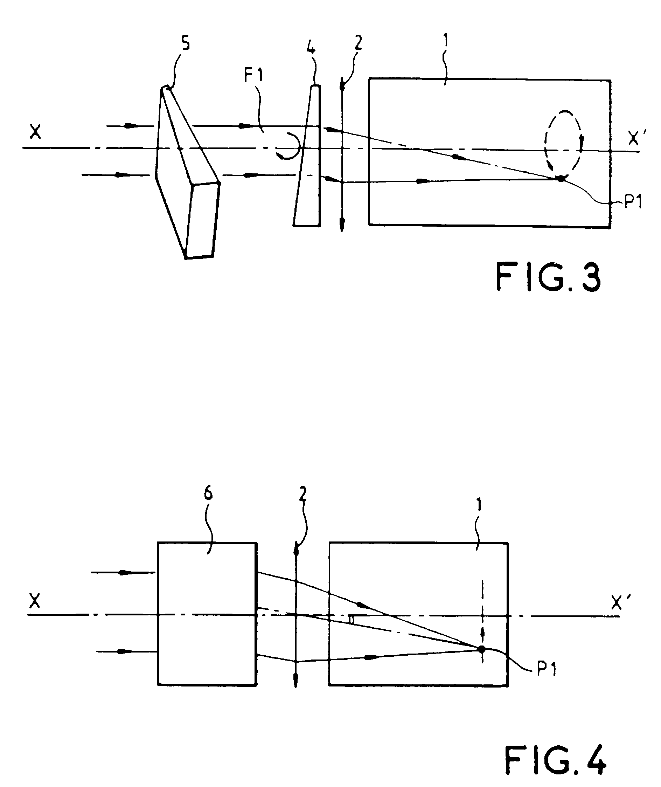

La figure 3 représentent un dispositif dans lequel une lame prismatique tournante 4 est insérée devant la lentille de focalisation 2 et permet d'assurer la même fonction que précédemment. L'association de deux lames tournantes 4 et 5 permet de faire décrire au point focal une figure plus complexe, minimisant le nombre d'impulsions au même point de la cellule 1.

La lame prismatique 4, selon l'exemple de la figure 3, est placée sur l'axe optique XX' de la lentille 2 et tourne autour de cet axe. Le point P1 peut donc décrire un cercle dans un plan perpendiculaire à l'axe XX'.

La présence éventuelle de la deuxième lame prismatique 5 permet de faire varier l'angle d'incidence du faisceau F1 sur la face d'entrée de la lame 4. En faisant tourner la lame 5, on peut donc modifier le rayon du cercle décrit par le point P1.

Selon une variante de réalisation de la figure 3, l'une ou l'autre des lames 4 ou 5, ou les deux lames, peuvent osciller chacune autour d'un axe perpendiculaire à l'axe XX'.

En l'absence de rotation de ces lames autour de l'axe XX', le point P1 subit un déplacement linéaire.

Lorsque l'oscillation de l'une, l'autre ou les deux lames est combinée avec leur rotation autour de l'axe XX', on peut obtenir tout déplacement du point P1 selon toute courbe choisie et on peut notamment comme on l'a dit précédemment décrire des cercles de diamètres différents.

Le dispositif de la figure 4 comporte un déflecteur acousto-optique 6. Ce type de déflecteur est connu dans la technique. Il est muni d'un transducteur piézo-électrique qui permet selon la fréquence du signal électrique, et donc du signal acoustique qu'il transmet, d'induire une déviation d'un angle déterminé du faisceau F1. Sous l'influence du déflecteur acousto-optique 6, le point P1 est donc soumis à un déplacement linéaire clans un plan perpendiculaire à l'axe XX'.

Le type de dispositif de la figure 4 peut être combiné à l'un des dispositifs précédents pour combiner un déplacement linéaire du point P1 à un déplacement circulaire.

Le dispositif de la figure 4 peut également être associé à des moyens non représentés lui permettant de tourner autour de l'axe XX'.

Pour une fréquence de commande du déflecteur acousto-optique 6, le faisceau F1 est défléchi d'un angle déterminé et le point P1 décrit un cercle d'un rayon déterminé lorsqu'on fait tourner le déflecteur 6 autour de l'axe XX'. Pour une autre fréquence appliquée au déflecteur 6, l'angle de déflexion du faisceau F1 prend une autre valeur et le rayon du cercle, décrit par le point P1 lorsque le déflecteur tourne, autour de l'axe XX' prend une autre valeur.

Ces différentes solutions peuvent être combinées avec une lentille de focalisation multifoyer qui divise l'énergie incidente, et donc la charge thermique déposée en tout point par le nombre de foyers.

Il est bien évident que la description qui précède n'a été faite qu'à titre d'exemple et que d'autres variantes peuvent être envisagées. Les formes de réalisation notamment peuvent être différentes, l'essentiel étant de déplacer le faisceau à réfléchir par rapport au miroir.

## Revendications

1. Dispositif miroir comprenant un miroir à conjugaison de phase et un dispositif de stabilisation permettant d'eviter une surchauffe du milieu non linéaire du dispositif miroir dans le cas d'impulsions à cadence de répétition élevée caractérisé en ce que le dispositif de stabilisation comporte un moyen de déplacement qui permet de déplacer le point de focalisation d'un faisceau incident à l'intérieur du miroir à conjugaison de phase.

2. Dispositif selon la revendication 1, caractérisé en ce qu'il comporte un dispositif de focalisation du faisceau incident permettant de focaliser le faisceau incident en un point situé à l'intérieur du miroir à conjugaison de phase.

3. Dispositif selon la revendication 2, caractérisé en ce que le moyen de déplacement est adapté pour déplacer le point de focalisation du faisceau incident dans un plan situé dans le miroir à conjugaison de phase.

4. Dispositif selon la revendication 3, caractérisé en ce que le dispositif de focalisation possède un axe optique, qui est décentré par rapport à l'axe du faisceau incident et est muni de moyen permettant de faire tourner le dispositif de focalisation autour de son axe optique.

5. Dispositif selon la revendication 3, caractérisé en ce qu'il comporte un moyen pour changer la direction du faisceau incident.

6. Dispositif selon la revendication 5, caractérisé en ce que le moyen pour changer la direction du faisceau incident est au moins un prisme mobile.

7. Dispositif selon la revendication 6, caractérisé en ce que le prisme est muni d'un axe de rotation perpendiculaire à l'une de ses faces d'entrée et sortie, et positionné parallèlement à l'axe du faisceau incident.

8. Dispositif selon la revendication 6, caractérisé en ce que le prisme possède un axe de rotation parallèle à l'une de ses faces d'entrée/sortie et positionné de façon à être perpendiculaire à l'axe du faisceau incident.

9. Dispositif selon la revendication 1, caractérisé en ce que les moyens de déplacements possèdent un déflecteur acousto-optique.

## Patentansprüche

1. Spiegelvorrichtung, die einen Spiegel mit Phasenkonjunktion und eine Stabilisierungsvorrichtung enthält, mit der eine Überhitzung des nicht-linearen Milieus der Spiegelvorrichtung im Fall von hohen Impulsfolgefrequenzen vermieden werden kann, dadurch gekennzeichnet, daß die Stabilisierungsvorrichtung ein Verschiebemittel aufweist, das den Brennpunkt eines einfallenden Strahls im Inneren des Spiegels mit Phasenkonjunktion zu verschieben erlaubt.

2. Vorrichtung nach Anspruch 1, dadurch gekennzeichnet, daß sie eine Vorrichtung zur Fokussierung des ankommenden Strahls besitzt, mit der der ankommende Strahl in einem Punkt fokussiert werden kann, der sich im Inneren des Spiegels mit Phasenkonjunktion befindet.

3. Vorrichtung nach Anspruch 2, dadurch gekennzeichnet, daß das Verschiebemittel den Brennpunkt des ankommenden Strahls in einer Ebene verschieben kann, die sich im Spiegel mit Phasenkonjunktion befindet.

4. Vorrichtung nach Anspruch 3, dadurch gekennzeichnet, daß die Fokussiervorrichtung eine optische Achse besitzt, die bezüglich der Achse des ankommenden Strahls dezentriert ist, und daß diese Vorrichtung ein Mittel aufweist, um die Fokussiervorrichtung um ihre optische Achse herum zu drehen.

5. Vorrichtung nach Anspruch 3, dadurch gekennzeichnet, daß sie ein Mittel aufweist, um die Richtung des ankommenden Strahls zu verändern.

6. Vorrichtung nach Anspruch 5, dadurch gekennzeichnet, daß das Mittel zur Veränderung der Richtung des ankommenden Strahls mindestens ein bewegliches Prisma ist.

7. Vorrichtung nach Anspruch 6, dadurch gekennzeichnet, daß das Prisma eine Drehachse besitzt, die senkrecht zur Eingangs- oder Ausgangsseite des Prismas und parallel zur Achse des ankommenden Strahls verläuft.

8. Vorrichtung nach Anspruch 6, dadurch gekennzeichnet, daß das Prisma eine Drehachse besitzt, die parallel zur Eingangs- oder Ausgangsseite des Prismas und senkrecht zur Achse des ankommenden Strahls verläuft.

9. Vorrichtung nach Anspruch 1, dadurch gekennzeichnet, daß die Verschiebemittel ein akusto-optisches Ablenkorgan besitzen.

## Claims

1. Mirror device comprising a phase conjugation mirror and a stabilizing device making it possible to avoid overheating of the non-linear medium of the mirror device in the event of pulses with a high repetition rate, characterised in that the stabilizing means includes a displacement means which allows the point of focusing of an incident beam to be displaced inside the phase conjugation mirror.

2. Device according to Claim 1, characterised in that it includes a device for focusing the incident beam enabling the incident beam to be focused at a point situated inside the phase conjugation mirror.

3. Device according to Claim 2, characterised in that the means of displacement is adapted in order to displace the point of focusing of the incident beam in a plane situated in the phase conjugation mirror.

4. Device according to Claim 3, characterised in that the focusing device possesses an optical axis which is off-centred relative to the axis of the incident beam and is endowed with a means enabling the focusing device to be rotated about its optical axis.

5. Device according to Claim 3, characterised in that it includes a means of changing the direction of the incident beam.

6. Device according to Claim 5, characterised in that the means of changing the direction of the incident beam is at least one movable prism.

7. Device according to Claim 6, characterised in that the prism is endowed with an axis of rotation perpendicular to one of its entrance and exit faces, and positioned parallel to the axis of the incident beam.

8. Device according to Claim 6, characterised in that the prism possesses an axis of rotation parallel to one of its entrance/exit faces and positioned so as to be perpendicular to the axis of the incident beam.

9. Device according to Claim 1, characterised in that the means of displacement possess an acousto-optic deflector.
